# EUROPÄISCHE PATENTANMELDUNG

(11) **EP 3 770 632 A1**
(43) Veröffentlichungstag der Anmeldung: **27.01.2021**
(21) Anmeldenummer: 19188373.5
(22) Anmeldetag: 25.07.2019
(51) Int. Cl.: G01S 7/41, G01S 13/04, G01S 13/06, G01S 13/87, G01S 13/88, G01F 23/284, G01S 7/40, G01S 13/86

(54) **KOMBINIERTE RADARSENSOREN MIT EINEM RADARENSOR ZUR FÜLLSTANDSMESSUNG UND EINEM RADASENSOR ZUR UMGEBUNGSÜBERWACHUNG**

(71) Anmelder: VEGA Grieshaber KG, 77709 Wolfach (DE)
(72) Erfinder: WELLE, Roland, 77756 Hausach (DE); BÖRSIG, Jörg, 77776 Schapbach (DE); DIETERLE, Levin, 77709 Oberwolfach (DE); WÄLDE, Steffen, 78078 Niedereschach (DE)
(74) Vertreter: Maiwald Patent- und Rechtsanwaltsgesellschaft mbH

(57) **Zusammenfassung**

Radarsensor mit einer ersten Radar-Sensoranordnung, eingerichtet zum Messen eines Füllstands eines Mediums in einem Behälter, und einer zweiten Radar-Sensoranordnung, eingerichtet zum Überwachen eines Umfelds des Radarsensors außerhalb des Behälters.

## Beschreibung

### Gebiet der Erfindung

Die Erfindung betrifft Messgeräte, die für die Verwendung im industriellen Umfeld eingerichtet sind. Insbesondere betrifft die Erfindung einen Radarsensor, eine austauschbare Radar-Sensoranordnung, ein Feldgerät mit einer Radar-Sensoranordnung und einen Behälter mit einem darin angebrachten Feldgerät.

### Hintergrund

In der Prozessindustrie, der Automatisierungstechnik und der Fertigungstechnik werden Feldgeräte verwendet, die Prozessgrößen, wie Füllstand, Grenzstand, Durchfluss, Temperatur oder Geschwindigkeiten, messen. Die Bedienung und Parametrierung solcher Feldgeräte erfolgt über eine digitale, gegebenenfalls drahtlose, Schnittstelle oder über eine Benutzereingabe direkt am Feldgerät. Beispiele für solche Schnittstellen sind HART, IO-Link, Bluetooth oder NFC. Die Benutzereingabe direkt am Feldgerät erfolgt durch eine Interaktion des Benutzers mit dem Feldgerät über Tasten, magnetische Elemente oder Ähnlichem. Hierfür können spezielle Bedienmodule zum Einsatz kommen, die vom Feldgerät abnehmbar ausgeführt sind und über das Feldgerät mit Energie versorgt werden. Die Benutzereingabe kann beispielsweise über vier Tasten durchgeführt werden. Darüber hinaus kann ein Display vorhanden sein, welches dem Benutzer die getätigten Eingaben anzeigt und somit ein Feedback über die Benutzereingaben ausgibt.

### Zusammenfassung

Es ist eine Aufgabe der Erfindung, die Bedienung von Feldgeräten zu vereinfachen.

Diese Aufgabe wird durch den Gegenstand der unabhängigen Patentansprüche gelöst. Weiterbildungen der Erfindung ergeben sich aus den Unteransprüchen und der folgenden Beschreibung.

Ein erster Aspekt der vorliegenden Offenbarung betrifft einen Radarsensor, der eine erste Radar-Sensoranordnung und eine zweite Radar-Sensoranordnung aufweist. Die erste Radar-Sensoranordnung ist zum Messen eines Füllstands eines Mediums in einer ersten Richtung, und beispielsweise in einem Behälter, eingerichtet. Es kann auch vorgesehen sein, dass die erste Radar-Sensoranordnung zum Messen eines Grenzstandes, eines Pegels eines offenen Gewässers und/oder der Fließgeschwindigkeit eines Mediums eingerichtet ist. Letzteres erfolgt beispielsweise über eine Dopplermessung mit einem schräg auf das Medium auftretenden Radarsignal, das beispielsweise an Kräuselungen auf der Oberfläche reflektiert wird.

Die zweite Radar-Sensoranordnung ist zum Überwachen eines Umfelds des Radarsensors in einer zweiten Richtung, beispielsweise außerhalb des Behälters, eingerichtet. Sie überwacht also beispielsweise einen anderen Raumbereich als die erste Radar-Sensoranordnung.

Der Begriff Umfeld des Radarsensors im Kontext der vorliegenden Offenbarung umfasst genau diejenigen Raumbereiche, in welchen sich die bestimmungsgemäß vom Füllstandmessgerät zu messende Füllgutoberfläche nicht befindet.

Der Radarsensor kann eingerichtet sein, die Messdaten der zweiten Radar-Sensoranordnung zu verwenden, um damit die Messung der ersten Radar-Sensoranordnung zu beeinflussen. Anwendungsbeispiele hierfür sind gestapelte IBC Behälter oder eine Erhöhung der Messrate der ersten Radar-Sensoranordnung bei Annäherung einer Person an die zweite Radar-Sensoranordnung. Gemäß einer Ausführungsform ist der Radarsensor zur Prozessautomatisierung im industriellen Umfeld eingerichtet. Unter dem Begriff "Prozessautomatisierung im industriellen Umfeld" kann ein Teilgebiet der Technik verstanden werden, welches alle Maßnahmen zum Betrieb von Maschinen und Anlagen ohne Mitwirkung des Menschen beinhaltet. Ein Ziel der Prozessautomatisierung ist es, das Zusammenspiel einzelner Komponenten einer Werksanlage in den Bereichen Chemie, Lebensmittel, Pharma, Erdöl, Papier, Zement, Schifffahrt oder Bergbau zu automatisieren. Hierzu können eine Vielzahl an Sensoren eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Grenzstand, Durchfluss, Druck oder Dichte überwacht und Einstellungen für die gesamte Werksanlage manuell oder automatisiert verändert werden können.

Ein Teilgebiet der Prozessautomatisierung im industriellen Umfeld betrifft die Logistikautomation. Mit Hilfe von Distanz- und Winkelsensoren werden im Bereich der Logistikautomation Abläufe innerhalb eines Gebäudes oder innerhalb einer einzelnen Logistikanlage automatisiert. Typische Anwendungen finden z.B. Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemein ist den zuvor aufgezählten Beispielen, dass eine Präsenzerkennung in Kombination mit einer genauen Vermessung der Größe und der Lage eines Objektes von der jeweiligen Anwendungsseite gefordert wird. Hierfür können Sensoren auf Basis optischer Messverfahren mittels Laser, LED, 2D-Kameras oder 3D-Kameras, die nach dem Laufzeitprinzip (time of flight, ToF) Abstände erfassen, verwendet werden.

Ein weiteres Teilgebiet der Prozessautomatisierung im industriellen Umfeld betrifft die Fabrik-/Fertigungsautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar.

Gemäß einer Ausführungsform ist die erste Radar-Sensoranordnung eingerichtet, ein erstes Radar-Messsignal zum Messen des Füllstands in eine erste Richtung abzustrahlen. Die zweite Radar-Sensoranordnung ist eingerichtet, ein zweites Radar-Messsignal zum Überwachen des Umfelds des Radarsensors in eine zweite Richtung abzustrahlen, die ungleich der ersten Richtung ist.

Beispielsweise schließen die erste Richtung und die zweite Richtung einen Winkel ein, der größer ist als 90°. Gemäß einer Ausführungsform beträgt dieser Winkel 180°, so dass die beiden Radar-Messsignale in entgegengesetzte Richtungen abgestrahlt werden.

Gemäß einer Ausführungsform weist der Radarsensor ein Messgerätegehäuse auf, wobei die erste Radar-Sensoranordnung und/oder die zweite Radar-Sensoranordnung in dem Messgerätegehäuse angeordnet sind.

Insbesondere kann vorgesehen sein, dass die zweite Radar-Sensoranordnung ihr Messsignal durch die Gehäusewand hindurch in Richtung des zu überwachenden Umfelds des Radarsensors abstrahlt.

Gemäß einer weiteren Ausführungsform ist die zweite Radar-Sensoranordnung eingerichtet, eine Geste eines Benutzers zu erkennen, wobei der Radarsensor, und insbesondere ein Prozessor oder eine anderweitige Steuereinheit des Radarsensors, eingerichtet ist, diese Geste zur Steuerung der ersten Radar-Sensoranordnung zu verwenden.

Gemäß einer weiteren Ausführungsform ist die zweite Radar-Sensoranordnung eingerichtet, einen Störreflektor außerhalb des Behälters zu erkennen, wobei der Radarsensor bzw. seine Steuereinheit eingerichtet ist, die Kenntnis des Störreflektors zur Identifikation einer Störreflexion, die von der ersten Radar-Sensoranordnung detektiert wurde, zu verwenden. Demnach können insbesondere Positionsdaten des Störreflektors, welche die zweite Radar-Sensoranordnung erfasst hat, verwendet werden, um in der von der ersten Radar-Sensoranordnung erfassten Echokurve eine Störreflektor-Reflexion zu erkennen und somit die Identifikation des Nutzechos zu erleichtern.

Bei diesem behälterexternen Störreflektor kann es sich beispielsweise um die Wand eines benachbarten Containers handeln und der Radarsensor kann eingerichtet sein, zu erkennen, dass dieser benachbarte Container auf den eigenen Container gestapelt ist. Hierfür kennt die Steuereinheit beispielsweise den zu erwartenden Abstand zur Unterseite des anderen Containers.

Gemäß einer weiteren Ausführungsform ist die zweite Radar-Sensoranordnung eingerichtet, einen Benutzer, der sich dem Radarsensor annähert, zu erkennen. Der Radarsensor ist hierbei eingerichtet, die Kenntnis der Annäherung des Benutzers zur Steuerung eines Displays oder einer Hintergrundbeleuchtung des Radarsensors zu verwenden.

So kann beispielsweise vorgesehen sein, dass sich die Hintergrundbeleuchtung einschaltet, wenn sich ein Benutzer nahe am Radarsensor befindet, bzw. das Display eingeschaltet wird.

Gemäß einer weiteren Ausführungsform ist die zweite Radar-Sensoranordnung eingerichtet, zu detektieren, ob eine Öffnung des Behälters geöffnet ist oder nicht. Wird festgestellt, dass die Öffnung des Behälters geöffnet ist, kann vorgesehen sein, dass der Radarsensor die Messrate der ersten Radar-Sensoranordnung ändert, beispielsweise erhöht (oder erniedrigt). Wird hingegen detektiert, dass die Behälteröffnung geschlossen ist, kann entsprechend eine andere Messrate eingestellt werden.

Es ist möglich, dass durch eine geöffnete Behälteröffnung ein Schüttgutstrom eingeleitet wird, der das Messergebnis verfälschen kann, wenn dieser den Messradarstrahl kreuzt. Aufgrund des Erkennens, dass die Behälteröffnung geöffnet (oder geschlossen) ist, kann die Messrate gedrosselt oder die Messung ganz ausgesetzt werden, da die Messergebnisse mit großer Wahrscheinlichkeit falsch sind. Zusätzlich kann dies dem Benutzer in der Leitstelle signalisiert werden.

Es kann gemäß einer weiteren Ausführungsform vorgesehen sein, mit der zweiten Radarsensoranordnung einen definierbaren Raumbereich zu überwachen, welcher von einem Flüssigkeitsstrom oder einem Schüttgutstrom bei einer Befüllung eines Behälters und/oder einer offenen Schüttguthalde durchlaufen wird. Der Raumbereich kann insbesondere durch Vorgabe eines Winkels und/oder durch Vorgabe einer minimalen und/oder einer maximalen Entfernung von der zweiten Radarsensoranordnung definiert werden.

Gemäß einer weiteren Ausführungsform kann vorgesehen sein, anhand einer zweiten Auswerteeinrichtung, welche mit dem zweiten Radarsensor verbunden ist, das Vorhandensein eines Flüssigkeits- oder Schüttgutstroms im definierten Raumbereich zu erkennen.

Gemäß einer weiteren Ausführungsform kann vorgesehen sein, das Vorhandensein eines Flüssigkeits- oder Schüttgutstroms im definierten Raumbereich bei der Steuerung des Ablaufes der ersten Radarsensoranordnung zu verwenden. Es kann insbesondere vorgesehen sein, die Messwiederholrate des ersten Radarsensors bei Vorhandensein eines Flüssigkeits- oder Schüttgutstroms im definierten Raumbereich zu erhöhen oder zu verringern. Es kann auch vorgesehen sein, die erste Radarsensoranordnung bei Vorhandensein eines Flüssigkeits- oder Schüttgutstroms im definierten Raumbereich zu deaktivieren. Hierdurch können Fehlmessungen verhindert werden und Energie eingespart werden.

Gemäß einer weiteren Ausführungsform kann vorgesehen sein, das Vorhandensein eines Flüssigkeits- oder Schüttgutstroms im definierten Raumbereich bei der Auswertung der erfassten Signale der ersten Radarsensoranordnung zu verwenden. Hierdurch können Fehlmessungen verhindert werden.

Gemäß einer weiteren Ausführungsform ist die zweite Radar-Sensoranordnung eingerichtet, durch Berührung oder ein Antippen durch einen Benutzer aktiviert zu werden, also aus einem Schlafmodus aufzuwachen.

Hierfür kann ein entsprechender Drucksensor oder kapazitiver Sensor vorgesehen sein. Auch kann ein Schalter vorgesehen sein.

Gemäß einer weiteren Ausführungsform handelt es sich bei der ersten Radar-Sensoranordnung um eine FMCW-Radar-Sensoranordnung (FMCW: Frequency Modulated Continuous Wave) oder eine Puls-Radar-Sensoranordnung. Bei der zweiten Radar-Sensoranordnung kann es sich um eine Chirp-Sequence-, FMCW- oder Puls-Doppler-Radar-Sensoranordnung handeln.

Gemäß einer weiteren Ausführungsform unterscheiden sich die Frequenzen der abgestrahlten Signale der ersten Radar-Sensoranordnung und der zweiten Radar-Sensoranordnung. Beispielsweise arbeitet die erste Radarsensoranordnung in einem Frequenzbereich zwischen 75GHz und 85GHz und die zweite Radar-Sensoranordnung in einem Frequenzbereich zwischen 57GHz und 64GHz. Dies kann die Zulassung des Gerätes vereinfachen.

Gemäß einer weiteren Ausführungsform ist vorgesehen, die zweite Radar-Sensoranordnung austauschbar auszuführen. Das Feldgerät ist hierbei eingerichtet, die Informationen der zweiten Radar-Sensoranordnung genau dann erfindungsgemäß auszuwerten, wenn diese mit dem Feldgerät verbunden wird, beispielsweise durch ein Aufschnappen oder ein Aufschrauben.

Ein weiterer Aspekt betrifft eine, ggf. austauschbare, Radar-Sensoranordnung, eingerichtet zum Überwachen eines Umfelds eines Feldgeräts und zum Anbringen an oder in einem Messgerätegehäuse eines Feldgeräts. Bei dieser Radar-Sensoranordnung handelt es sich beispielsweise um ein Bedien- und/oder Anzeigemodul des Feldgeräts, welches darüber hinaus das Umfeld des Feldgeräts überwachen kann. Die Radar-Sensoranordnung kann eine Schnittstelle zum Übertragen von durch die Umfeldüberwachung gewonnenen Daten an das Feldgerät, wenn die Radar-Sensoranordnung an dem Feldgerät angebracht ist, aufweisen.

Ein weiterer Aspekt betrifft ein Feldgerät mit einer oben und im Folgenden beschriebenen, ggf. austauschbaren, Radar-Sensoranordnung.

Ein weiterer Aspekt betrifft einen Behälter mit einem daran angebrachten, oben und im Folgenden beschriebenen Feldgerät. Beispielsweise ist das Feldgerät in eine Behälteröffnung eingeschraubt. Die erste Sensoranordnung des Feldgeräts, bei der es sich um eine Radar-Sensoranordnung, eine Ultraschall-Sensoranordnung, eine Druck-Sensoranordnung oder eine kapazitive oder vibratorische Sensoranordnung handeln kann, befindet sich beispielsweise auf der prozesszugewandten Seite des Radarsensors und die zweite Radar-Sensoranordnung auf der entgegengesetzten, prozessabgewandten Seite, so dass sie das Umfeld außerhalb des Behälters überwachen kann.

Im Folgenden werden mit Verweis auf die Figuren Ausführungsformen der vorliegenden Offenbarung beschrieben. Werden in den Figuren die gleichen Bezugszeichen verwendet, so bezeichnen diese gleiche oder ähnliche Elemente. Die Darstellungen in den Figuren sind schematisch und nicht maßstäblich.

### Kurze Beschreibung der Figuren

Fig. 1 zeigt einen Behälter mit einem darin angebrachten Feldgerät.
Fig. 2A zeigt ein Feldgerät in Form eines Radarsensors.
Fig. 2B zeigt die Abstrahlrichtungen einer ersten Radar-Sensoranordnung und einer zweiten Radar-Sensoranordnung.
Fig. 2C zeigt das Feldgerät der Fig. 2A mit einer anderen Abstrahlrichtung der zweiten Radar-Sensoranordnung.
Fig. 2D zeigt den Winkel der Abstrahlrichtungen gemäß Fig. 2C.
Fig. 3 zeigt ein Feldgerät gemäß einer weiteren Ausführungsform.
Fig. 4 zeigt zwei Behälter mit darin angebrachten Feldgeräten.
Fig. 5 zeigt einen Behälter mit einem Feldgerät, das unterhalb einer Behälteröffnung angebracht ist.
Fig. 6 zeigt ein Beispiel einer Gestenerkennung.
Fig. 7A zeigt eine austauschbare Radar-Sensoranordnung in Form eines Bedienmoduls in perspektivischer Ansicht und in Seitenansicht.
Fig. 7B zeigt eine austauschbare Radar-Sensoranordnung zur Gestenerkennung.

### Detaillierte Beschreibung von Ausführungsformen

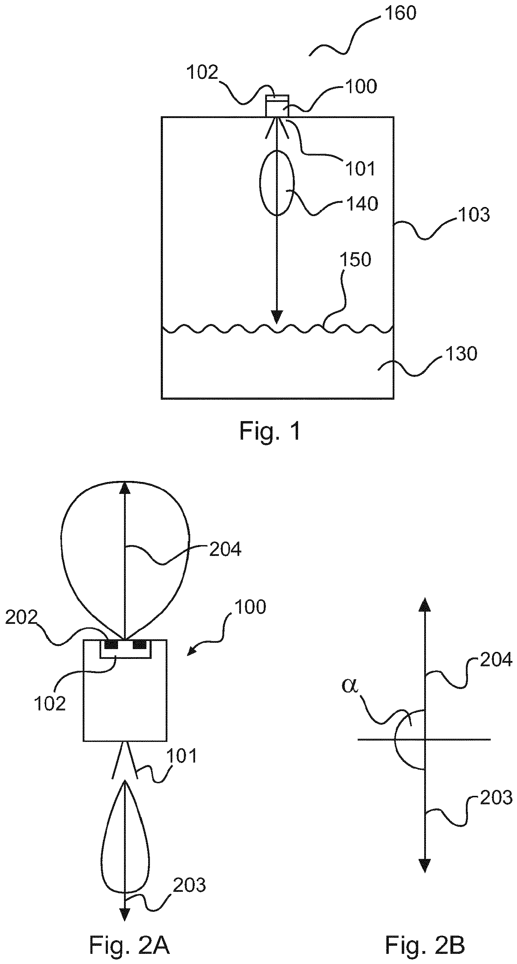

Fig. 1 zeigt einen Behälter 103 mit einer Behälteröffnung, in welcher ein Feldgerät 100 angeordnet ist. Bei dem Feldgerät 100 handelt es sich beispielsweise um einen Radarsensor, der eine erste Radar-Sensoranordnung 101 aufweist, sowie eine zweite Radar-Sensoranordnung 102.

Das Feldgerät 100 kann zur berührungslosen Messung des Füllstands eingerichtet sein. Es kann aber auch in Form eines TDR-Sensors oder eines Vibrationssensors eingerichtet sein. Im letzteren Fall wird ein Grenzstand erfasst.

Grundsätzlich kann es sich bei dem Feldgerät 100 auch um einen Drucksensor oder Durchflusssensor handeln, der eine "zweite" Radar-Sensoranordnung 102 zur Umfeldüberwachung aufweist.

Die erste Radar-Sensoranordnung dient der Bestimmung des Füllstands des Füllguts bzw. Mediums 130 in dem Behälter 103, beispielsweise indem ein Radarsignal 140 in Richtung Füllgutoberfläche 150 abgestrahlt, dort reflektiert und von der ersten Radar-Sensoranordnung 101 wieder empfangen wird. Das empfangene, reflektierte Messsignal 140 wird dann analysiert und es wird das Füllgutecho bestimmt, aus dessen Position (die mit der Laufzeit des Messsignals korrespondiert) der Füllstand berechnet werden kann.

Die erste Radar-Sensoranordnung 101 kann auch eingerichtet sein, die Füllgutoberfläche abzutasten, um die Topologie der Füllgutoberfläche zu bestimmen. In diesem Fall kann die erste Radar-Sensoranordnung einen Radarchip mit einem Antennenarray zur Strahlsteuerung aufweisen.

Die zweite Radar-Sensoranordnung 102 ist zur Überwachung des Umfelds 160 außerhalb des Behälters 103 ausgeführt und beispielsweise auf oder direkt unterhalb der Oberseite des Feldgeräts, also der der Prozessseite abgewandten Seite des Radarsensors 100 angeordnet.

Der Radarsensor 100 ist somit zur Überwachung seines Umfelds eingerichtet und kann insbesondere zum Einsatz in der Füllstandmesstechnik, Prozessmesstechnik, Fertigungstechnik oder Automatisierungsindustrie eingerichtet sein.

Für bestimmte Anwendungsfälle kann es vorteilhaft sein, das Umfeld des Feldgeräts zu überwachen. Da hierfür die zweite Radar-Sensoranordnung 102 eingesetzt wird, sind zusätzliche Infrarotsensoren, Ultraschallsensoren, kapazitive Sensoren oder Kameras nicht für die Umfeldüberwachung erforderlich.

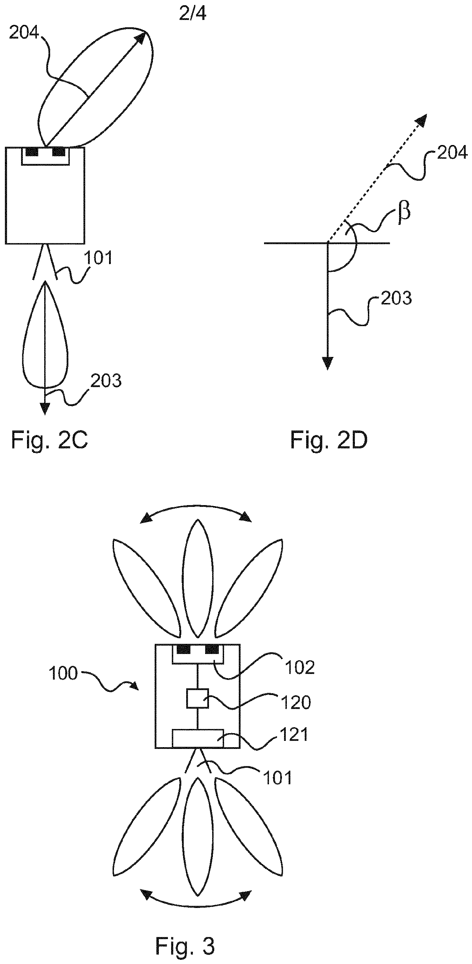

Zusätzlich zur ersten Sensoranordnung 101 des Feldgeräts 100 ist die Radar-Sensoranordnung 102 vorgesehen, die beispielsweise auf der im Gehäuse 105 gegenüberliegenden Seite angebracht ist und der Umfeldüberwachung dient. Diese zweite Sensoranordnung 102 kann mit anderen Antennenvorrichtungen ausgestattet sein wie die erste Radar-Sensoranordnung 101, die auch als Prozessmessradarmodul bezeichnet werden kann. Das Prozessmessradarmodul kann beispielsweise mit einer Hornantenne versehen sein, um die Prozessgröße zu messen, wohingegen die zweite Radar-Sensoranordnung 102 für die Umfelderkennung mit Patchantennen 202 (vgl. Fig. 2A) ausgestattet sein kann. Auch kann die zweite Radar-Sensoranordnung 102 eingerichtet sein, durch die Gehäusewand des Radarsensors hindurch zu messen, so dass von außen nicht zwingend Antennen sichtbar sind.

Für die Umfelderkennung kann es vorgesehen sein, dass die Hauptstrahlrichtung 204 der zweiten Radar-Sensoranordnung 102 in eine andere Richtung als die Hauptstrahlrichtung der ersten Radar-Sensoranordnung 101 ausgerichtet wird. Sinnvoll ist dabei neben einer antiparallelen Ausrichtung, wie sie in Fig. 2B zu sehen ist (α = 180°), eine Ausrichtung in einem stumpfen Winkel, wie sie in Fig. 2D zu sehen ist (β ≥ 90°).

Es kann auch vorgesehen sein, dass sowohl die erste Radar-Sensoranordnung 101 als auch die zweite Radar-Sensoranordnung 102 als sogenanntes MIMO-Radarmodul (Multiple Input Multiple Output) bzw. als Radarmodul mit analoger oder digitaler Strahlformung ausgeführt sind. Dies ist beispielsweise in Fig. 3 dargestellt, welche zeigt, dass die Steuereinheit 120 die Schaltung 121 der ersten Radar-Sensoranordnung 101 und eine entsprechende Steuerschaltung der zweiten Radar-Sensoranordnung 102 derart ansteuern kann, dass beide Messsignale in verschiedene Richtungen abgestrahlt werden können, um Füllgutoberfläche bzw. Umfeld abzuscannen.

Der Radarsensor kann eingerichtet sein, dass eine Hintergrundbeleuchtung und/oder das zugehörige Display, das sich auf dem Radarsensor 100 befindet, nur dann angeschaltet wird, wenn sich eine Person nähert bzw. vor dem Radarsensor steht oder sich kein Objekt vor dem Messgerät befindet.

Für diese Präsenzerkennung kann vorgesehen sein, die zweite Radar-Sensoranordnung 102 einzusetzen.

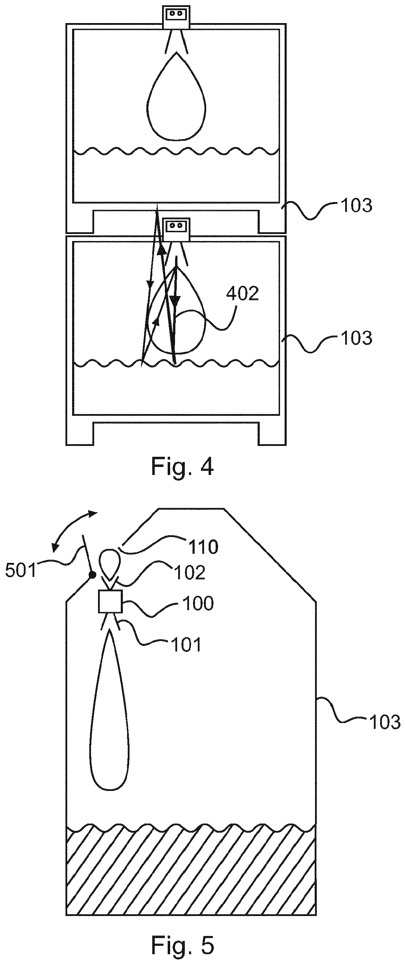

Auch kann der Radarsensor eingerichtet sein, an stapelbaren und mobilen Behältern 103 angebracht zu werden, wie dies in der Fig. 4 gezeigt ist. Für eine Erkennung, ob sich über dem jeweiligen Messgerät ein weiteres Objekt (zum Beispiel Behälter) befindet, kann die zusätzliche, zweite Radar-Sensoranordnung 102 eingerichtet sein. Diese Information kann zur Berechnung der Messgröße herangezogen werden. Möglich ist, dass durch gestapelte Behälter 103 "Geisterziele" durch Mehrfachreflexionen 402 entstehen können, die in Wirklichkeit nicht existieren.

Auch kann vorgesehen sein, dass die Messraten der ersten und/oder der zweiten Radar-Sensoranordnung 101, 102 in Abhängigkeit davon, ob Objekte im Umfeld des Radarsensors detektiert werden oder nicht, angepasst wird. Zum Beispiel können die Radarsensoren 100 unter einem Deckel 501, also unterhalb einer Behälteröffnung 110, montiert sein, und je nachdem, ob der Behälter geöffnet oder geschlossen ist, kann die Messrate erhöht oder verringert werden (oder umgekehrt). Auch kann die Messung ganz eingestellt werden. Ein entsprechender Messaufbau ist in Fig. 5 dargestellt.

Die vorliegende Offenbarung sieht ein neues Bedienkonzept vor, bei dem der Benutzer über Gesten mit dem Bedienmodul des Radarsensors bzw. Feldgeräts interagiert. Diese Gesten werden über die zweite Radar-Sensoranordnung 102 erfasst, welche im Bedienmodul oder im Gehäuse des Radarsensors integriert ist.

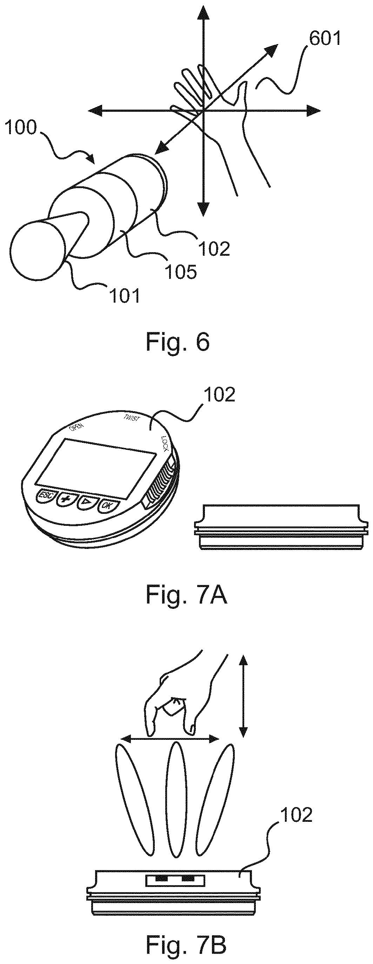

Fig. 7A zeigt eine austauschbare Radar-Sensoranordnung in Form eines Bedienmoduls in perspektivischer Ansicht und in Seitenansicht. Fig. 7B zeigt die austauschbare Radar-Sensoranordnung der Fig. 7A, bei der auch die Sensoreinrichtung zur Gestenerkennung dargestellt ist.

MIMO-Radarchips können durch entsprechende Signalverarbeitungseinheiten darauf optimiert werden, Gesten, die mit der Hand ausgeführt werden, zu erkennen. Diese Radarchips werden hierfür beispielsweise so in das Bedienmodul eingebaut, dass die Hauptabstrahlrichtung des gestenerkennenden Radarchips im Wesentlichen orthogonal zum Display ausgerichtet ist (vgl. Fig. 7B). Das Bedienmodul 102 wird dann in ein Feldgerät (zum Beispiel in einem Radarsensor 100) eingebaut und befindet sich dann beispielsweise auf der dem Prozessanschluss gegenüberliegenden Seite des Feldgerätegehäuses, wie dies in Fig. 6 gezeigt ist.

Vorteilhaft am Radarverfahren ist, dass neben Abständen auch Geschwindigkeiten ausgewertet werden können, was bei anderen Umfeldüberwachungssensoren nicht zwangsläufig der Fall ist. Nur mithilfe der Geschwindigkeitskomponente ist eine Gestenerkennung mit erhöhter Informationsdichte mittels Radar möglich.

Die folgenden Modulationsformen können implementiert werden: Für das Umfeldüberwachungsradarmodul (zweite Radar-Sensoranordnung 102) kann beispielsweise das Chirp-Sequence-, FMCW- oder Puls-Doppler-Verfahren angewendet werden. Für das Messradarmodul (erste Radar-Sensoranordnung 101) kann beispielsweise das FMCW- oder Puls-Radar-Verfahren angewendet werden. Alternativ können die oben genannten Radarverfahren verwendet werden.

Weiterhin können die beiden Radar-Sensoranordnungen als MIMO-Systeme ausgeführt sein. Das bedeutet, dass mehrere Sende- und/oder Empfangsantennen vorhanden sein können. Damit lässt sich die Hauptabstrahl- und Hauptempfangsrichtung der Radar-Sensoranordnung steuern, was in erheblichem Maße dazu beiträgt, Gesten zu erkennen (vgl. Fig. 3).

Damit der gestenerkennende Radarsensor (genauer: die zweite Radar-Sensoranordnung 102) nicht die ganze Zeit die Umgebung abtasten muss, kann diese beispielsweise durch Anklopfen des Benutzers an der Gehäusewand des Feldgeräts aktiviert werden. Nach dem Anklopfen kann das Bedienmodul bzw. das Feldgerät dann über Gesten gesteuert und parametriert werden. Dieser Ablauf hat den Vorteil, dass das Feldgerät nicht aufgeschraubt werden muss, was bei Feldgeräten, die in explosionsgefährdeten Bereichen eingesetzt werden, vorteilhaft sein kann.

Für diese Art der Parametrierung benötigt das Bedienmodul Signalisierungseinrichtungen, um dem Benutzer Feedback zu geben, ob die per Gestensteuerung eingegebenen Befehle korrekt verstanden wurden. Dieses Feedback kann beispielsweise optisch (Display, LED), akustisch (signalbetont) oder vibronisch (Vibrieren des Gehäuses) realisiert werden.

Im Folgenden sind Aspekte der vorliegenden Offenbarung aufgelistet:
Neben dem üblichen Prozessradar (erste Radar-Sensoranordnung) 101 ist das zusätzliche Radarmodul (zweite Radar-Sensoranordnung) 102 so angeordnet, dass die Hauptabstrahlrichtung des zusätzlichen Radarmoduls in einem Winkel größer 90° relativ zur Hauptabstrahlrichtung des Prozessmessmoduls aufweist.

Die beiden Radar-Sensoranordnungen 101, 102 können unterschiedliche Frequenzbereiche, Radarmodulationsformen, Signalverarbeitungsalgorithmen, Antennenkonstruktionen, Antennenöffnungswinkel, Anzahl an Sende- und Empfangsantennen, Messbereiche, Messzeitintervalle, etc.... aufweisen.

Die Messgröße kann unter Verwendung beider Radar-Sensoranordnungen 101, 102 bestimmt werden.

Die zweite Radar-Sensoranordnung 102 kann zur Umfeldüberwachung verwendet werden.

Die zweite Radar-Sensoranordnung 102 kann zur Gestensteuerung verwendet werden.

Der Radarsensor 100 kann Vorteile bei Radarsensoren für explosionsgefährdete Bereiche bieten, da zur Bedienung des Sensors, dieser nicht geöffnet werden muss, bzw. der Deckel nicht aufgeschraubt werden muss.

Die zweite Radar-Sensoranordnung 102 zur Gestensteuerung kann mehrere Sende- und/oder Empfangsantennen aufweisen, die eine analoge oder digitale Strahlformung erlauben.

Beide Radar-Sensoranordnungen 101, 102 können dazu eingerichtet sein, neben Abständen auch Geschwindigkeiten erfassen zu können.

Die Energie der Radar-Sensoranordnungen 101, 102 kann dabei beispielsweise aus einer IO-Link, 4...20mA Schnittstelle oder einer Batterie/Akku bezogen werden.

Im Falle der Gestensteuerung benötigt der Benutzer Feedback, ob die eingegebenen Informationen vom Sensor verstanden wurden. Dies kann beispielsweise in Form eines Displays, LEDs oder eines vibronischen oder akustischen Signals sein.

Damit die Gestensteuerung nicht permanent das Umfeld abscannen muss, kann diese beispielsweise durch "Anklopfen" aktiviert werden.

Es kann vorgesehen sei, dass die erste Radar-Sensoranordnung 101 und zweite Radar-Sensoranordnung 102 in einem Halbleiterbaustein integriert sind. Um die Signale an die jeweiligen Antennen zu leiten, können Hohlleiter, Koaxialleiter oder dielektrische Wellenleiter verwendet werden.

Der Radarchip im Bedienmodul kann als MIMO-, SIMO- oder MOSI- Chip ausgeführt sein (ein oder mehrere Sende- bzw. Empfangsantennen) und kann somit Strahlformung betreiben.

Der Radarchip im Bedienmodul kann nach dem FMCW-Radar-, dem Chirp-Sequence- oder dem Puls-Doppler-Verfahren eingerichtet sein.

Die Hauptstrahlrichtung der zweiten Radar-Sensoranordnung 102 steht orthogonal auf dem Display des Bedienmoduls.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Radarsensor (100), aufweisend:
eine erste Radar-Sensoranordnung (101), eingerichtet zum Messen eines Füllstands eines Mediums in einer ersten Richtung;
eine zweite Radar-Sensoranordnung (102), eingerichtet zum Überwachen eines Umfelds des Radarsensors in einer zweiten Richtung.

2. Radarsensor (100) nach Anspruch 1,
wobei die erste Radar-Sensoranordnung (101) eingerichtet ist, ein erstes Radar-Messsignal zum Messen des Füllstands in die erste Richtung abzustrahlen;
wobei die zweite Radar-Sensoranordnung (102) eingerichtet ist, ein zweites Radar-Messsignal zum Überwachen des Umfelds des Radarsensors in die zweite Richtung abzustrahlen, die unterschiedlich zur ersten Richtung ist.

3. Radarsensor (100) nach Anspruch 1 oder 2,
wobei die erste Richtung und die zweite Richtung einen Winkel einschließen, der größer ist als 90 Grad.

4. Radarsensor (100) nach einem der vorhergehenden Ansprüche,
wobei die erste Richtung und die zweite Richtung einen Winkel von 180 Grad einschließen.

5. Radarsensor (100) nach einem der vorhergehenden Ansprüche, weiter aufweisend:
Messgerätegehäuse (105);
wobei die erste Radar-Sensoranordnung (101) und die zweite Radar-Sensoranordnung (102) in dem Messgerätegehäuse angeordnet sind.

6. Radarsensor (100) nach einem der vorhergehenden Ansprüche,
wobei die zweite Radar-Sensoranordnung (102) eingerichtet ist, eine Geste eines Benutzers zu erkennen;
wobei der Radarsensor eingerichtet ist, diese Geste zur Steuerung der ersten Radar-Sensoranordnung (101) zu verwenden.

7. Radarsensor (100) nach einem der vorhergehenden Ansprüche,
wobei die zweite Radar-Sensoranordnung (102) eingerichtet ist, einen Störreflektor außerhalb des Behälters zu erkennen;
wobei der Radarsensor eingerichtet ist, die Kenntnis des Störreflektors zur Identifikation einer Störreflexion, die von der ersten Radar-Sensoranordnung (101) detektiert wurde, zu verwenden.

8. Radarsensor (100) nach einem der vorhergehenden Ansprüche,
wobei die zweite Radar-Sensoranordnung (102) eingerichtet ist, einen Benutzer, der sich dem Radarsensor annähert, zu erkennen;
wobei der Radarsensor eingerichtet ist, die Kenntnis der Annäherung des Benutzers zur Steuerung eines Displays (104) oder einer Hintergrundbeleuchtung zu verwenden.

9. Radarsensor (100) nach einem der vorhergehenden Ansprüche,
wobei die zweite Radar-Sensoranordnung (102) eingerichtet ist, zu detektieren, ob sich eines oder mehrere Objekte im Erfassungsbereich der zweiten Radar-Sensoranordnung befinden oder nicht;
wobei der Radarsensor eingerichtet ist, die Messrate der ersten Radar-Sensoranordnung (101) zu ändern, wenn detektiert wurde, dass sich eines oder mehrere Objekte im Erfassungsbereich der zweiten Radar-Sensoranordnung befinden.

10. Radarsensor (100) nach einem der vorhergehenden Ansprüche,
wobei die zweite Radar-Sensoranordnung (102) eingerichtet ist, zu detektieren, ob eine Öffnung (110) des Behälters (103) geöffnet ist oder nicht;
wobei der Radarsensor eingerichtet ist, die Messrate der ersten Radar-Sensoranordnung (101) zu ändern, wenn detektiert wurde, dass die Öffnung geöffnet ist.

11. Radarsensor (100) nach einem der vorhergehenden Ansprüche,
wobei die zweite Radar-Sensoranordnung (102) eingerichtet ist, durch Berührung, Klopfen oder Antippen durch einen Benutzer aktiviert zu werden.

12. Radarsensor (100) nach einem der vorhergehenden Ansprüche,
wobei die erste Radar-Sensoranordnung (101) eine FMCW-Radar-Sensoranordnung oder eine Puls-Radar-Sensoranordnung ist; und
wobei die zweite Radar-Sensoranordnung (102) eine Chirp-Sequence-, FMCW- oder Puls-Doppler-Radarsensoranordnung ist.

13. Radarsensor (100) nach einem der vorhergehenden Ansprüche,
wobei die erste Radar-Sensoranordnung (101) Radarsignale in einem ersten Frequenzbereich abstrahlt; und
wobei die zweite Radar-Sensoranordnung (102) Radarsignale in einem zweiten Frequenzbereich abstrahlt, welcher ungleich dem ersten Frequenzbereich ist.

14. Radar-Sensoranordnung (102), eingerichtet zum Überwachen eines Umfelds eines Feldgeräts, eingerichtet zum Anbringen an oder in einem Messgerätegehäuse (105) eines Feldgeräts (100), aufweisend eine Schnittstelle (300) zum Übertragen von durch die Umfeldüberwachung gewonnenen Daten an das Feldgerät, wenn die Radar-Sensoranordnung an dem Feldgerät angebracht ist.

15. Radar-Sensoranordnung (102) nach Anspruch 14, wobei die Schnittstelle (300) auch zur Energieversorgung der Radar-Sensoranordnung durch das Feldgerät (100) ausgeführt ist.

16. Radar-Sensoranordnung (102) nach Anspruch 14 oder 15, wobei die Schnittstelle (300) als 4-20 mA Zweileiterschnittstelle ausgeführt ist.

17. Radar-Sensoranordnung (102) nach einem der Ansprüche 14 bis 16, eingerichtet als Bedienmodul des Feldgeräts (100).

18. Radar-Sensoranordnung (102) nach einem der Ansprüche 14 bis 17, ausgeführt als austauschbare Radar-Sensoranordnung.

19. Feldgerät (100) mit einer Radar-Sensoranordnung (102) nach einem der Ansprüche 14 bis 18.

20. Feldgerät (100) nach Anspruch 19, ausgeführt als Füllstandmessgerät, Druckmessgerät, Durchflussmessgerät oder Grenzstandsensor.

## Geänderte Patentansprüche

### Geänderte Patentansprüche gemäss Regel 137(2) EPÜ.

1. Feldgerät (100), aufweisend:
ein Prozessmessradarmodul (101), eingerichtet zum Messen eines Füllstands eines Mediums in einer ersten Richtung;
eine zweite Radar-Sensoranordnung (102), die auf einer der Prozessseite abgewandten Seite des Feldgeräts angeordnet ist und eingerichtet ist zum Überwachen eines Umfelds des Feldgeräts in einer zweiten Richtung.

2. Feldgerät (100) nach Anspruch 1,
wobei das Prozessmessradarmodul (101) eingerichtet ist, ein erstes Radar-Messsignal zum Messen des Füllstands in die erste Richtung abzustrahlen;
wobei die zweite Radar-Sensoranordnung (102) eingerichtet ist, ein zweites Radar-Messsignal zum Überwachen des Umfelds des Feldgeräts in die zweite Richtung abzustrahlen, die unterschiedlich zur ersten Richtung ist.

3. Feldgerät (100) nach Anspruch 1 oder 2,
wobei die erste Richtung und die zweite Richtung einen Winkel einschließen, der größer ist als 90 Grad.

4. Feldgerät (100) nach einem der vorhergehenden Ansprüche,
wobei die erste Richtung und die zweite Richtung einen Winkel von 180 Grad einschließen.

5. Feldgerät (100) nach einem der vorhergehenden Ansprüche, weiter aufweisend:
Messgerätegehäuse (105);
wobei das Prozessmessradarmodul (101) und die zweite Radar-Sensoranordnung (102) in dem Messgerätegehäuse angeordnet sind.

6. Feldgerät (100) nach einem der vorhergehenden Ansprüche,
wobei die zweite Radar-Sensoranordnung (102) eingerichtet ist, eine Geste eines Benutzers zu erkennen;
wobei der Radarsensor eingerichtet ist, diese Geste zur Steuerung des Prozessmessradarmoduls (101) zu verwenden.

7. Feldgerät (100) nach einem der vorhergehenden Ansprüche,
wobei die zweite Radar-Sensoranordnung (102) eingerichtet ist, einen Störreflektor außerhalb des Behälters zu erkennen;
wobei das Feldgerät eingerichtet ist, die Kenntnis des Störreflektors zur Identifikation einer Störreflexion, die von dem Prozessmessradarmodul (101) detektiert wurde, zu verwenden.

8. Feldgerät (100) nach einem der vorhergehenden Ansprüche,
wobei die zweite Radar-Sensoranordnung (102) eingerichtet ist, einen Benutzer, der sich dem Radarsensor annähert, zu erkennen;
wobei das Feldgerät eingerichtet ist, die Kenntnis der Annäherung des Benutzers zur Steuerung eines Displays (104) oder einer Hintergrundbeleuchtung zu verwenden.

9. Feldgerät (100) nach einem der vorhergehenden Ansprüche,
wobei die zweite Radar-Sensoranordnung (102) eingerichtet ist, zu detektieren, ob sich eines oder mehrere Objekte im Erfassungsbereich der zweiten Radar-Sensoranordnung befinden oder nicht;
wobei das Feldgerät eingerichtet ist, die Messrate des Prozessmessradarmoduls (101) zu ändern, wenn detektiert wurde, dass sich eines oder mehrere Objekte im Erfassungsbereich der zweiten Radar-Sensoranordnung befinden.

10. Feldgerät (100) nach einem der vorhergehenden Ansprüche,
wobei die zweite Radar-Sensoranordnung (102) eingerichtet ist, zu detektieren, ob eine Öffnung (110) des Behälters (103) geöffnet ist oder nicht;
wobei das Feldgerät eingerichtet ist, die Messrate des Prozessmessradarmoduls (101) zu ändern, wenn detektiert wurde, dass die Öffnung geöffnet ist.

11. Feldgerät (100) nach einem der vorhergehenden Ansprüche,
wobei die zweite Radar-Sensoranordnung (102) eingerichtet ist, durch Berührung, Klopfen oder Antippen durch einen Benutzer aktiviert zu werden.

12. Feldgerät (100) nach einem der vorhergehenden Ansprüche,
wobei das Prozessmessradarmodul (101) eine FMCW-Radar-Sensoranordnung oder eine Puls-Radar-Sensoranordnung ist; und
wobei die zweite Radar-Sensoranordnung (102) eine Chirp-Sequence-, FMCW- oder Puls-Doppler-Radarsensoranordnung ist.

13. Feldgerät (100) nach einem der vorhergehenden Ansprüche,
wobei das Prozessmessradarmodul (101) Radarsignale in einem ersten Frequenzbereich abstrahlt; und
wobei die zweite Radar-Sensoranordnung (102) Radarsignale in einem zweiten Frequenzbereich abstrahlt, welcher ungleich dem ersten Frequenzbereich ist.

14. Radar-Sensoranordnung (102) für ein Feldgerät nacheinam der Ansprüche 1 bis 13, eingerichtet zum Überwachen eines Umfelds des Feldgeräts, eingerichtet zum Anbringen an oder in einem Messgerätegehäuse (105) des Feldgeräts (100), aufweisend eine Schnittstelle (300) zum Übertragen von durch die Umfeldüberwachung gewonnenen Daten an das Feldgerät, wenn die Radar-Sensoranordnung an dem Feldgerät angebracht ist.

15. Radar-Sensoranordnung (102) nach Anspruch 14, wobei die Schnittstelle (300) auch zur Energieversorgung der Radar-Sensoranordnung durch das Feldgerät (100) ausgeführt ist.

16. Radar-Sensoranordnung (102) nach Anspruch 14 oder 15, wobei die Schnittstelle (300) als 4-20 mA Zweileiterschnittstelle ausgeführt ist.

17. Radar-Sensoranordnung (102) nach einem der Ansprüche 14 bis 16, eingerichtet als Bedienmodul des Feldgeräts (100).

18. Radar-Sensoranordnung (102) nach einem der Ansprüche 14 bis 17, ausgeführt als austauschbare Radar-Sensoranordnung.

19. Feldgerät (100) mit einer Radar-Sensoranordnung (102) nach einem der Ansprüche 14 bis 18.

20. Feldgerät (100) nach Anspruch 19, ausgeführt als Füllstandmessgerät, Druckmessgerät, Durchflussmessgerät oder Grenzstandsensor.
